# EUROPEAN PATENT SPECIFICATION

(11) **EP 3 769 491 B1**
(45) Date of publication and mention of the grant of the patent: **07.08.2024**
(21) Application number: 19706607.9
(22) Date of filing: 21.02.2019
(51) Int. Cl.: H04L 67/10

(54) **METHOD FOR AN ENHANCED FUNCTIONALITY OF A NETWORK FUNCTION ENTITY IN A CARRIER TELECOMMUNICATIONS NETWORK**
VERFAHREN FÜR EINE ERWEITERTE FUNKTIONALITÄT EINER NETZWERKFUNKTIONSEINHEIT IN EINEM TRÄGERTELEKOMMUNIKATIONSNETZWERK
PROCÉDÉ POUR UNE FONCTIONNALITÉ AMÉLIORÉE D'UNE ENTITÉ DE FONCTION DE RÉSEAU DANS UN RÉSEAU DE TÉLÉCOMMUNICATION À PORTEUSE

(30) Priority: 20.03.2018 EP 18162860
(43) Date of publication of application: 27.01.2021
(73) Proprietor: Deutsche Telekom AG, 53113 Bonn (DE)
(72) Inventor: KOLBE, Hans-Jörg, 64295 Darmstadt (DE); HAAG, Thomas, 63110 Rodgau (DE); EINSIEDLER, Hans Joachim, 13189 Berlin (DE)
(74) Representative: Schwöbel, Thilo K.
(86) International application number: PCT/EP2019/054259
(87) International publication number: WO 2019/179714

(56) References cited:
- US-A1- 2014 373 146
- US-A1- 2015 180 769

## Description

### BACKGROUND

The present invention relates a method for an enhanced functionality of a network function entity in a carrier telecommunications network, the network function entity comprising a control plane functionality and a user plane functionality, and the network function entity comprising, as part of the control plane functionality and/or as part of the user plane functionality, a plurality of client entities wherein the client entities are clients to a messaging system functionality.

The exchange of packetized information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

In carrier network architectures currently under development, the network function entities in data plane and control plane, which are usually referred to as core network for mobile networks and subscriber edge for fixed line network, are typically decomposed into two layers.

The control plane (CP) functions (together called control plane functionality) are expected to be implemented as modules running on top of server virtualization technology while the user plane functions (UPF) are in many cases implemented on dedicated hardware and in some cases on standardized hardware, such as x86-based PC hardware.

In order to set up and maintain subscriber sessions, triggered by the user equipment - which can be, e.g., a smart phone or a home gateway -, a session setup is being negotiated by exchanging messages between the user equipment and the control plane entities. This session may be a fixed network session and/or a mobile network session. Inside the control plane domain, those control plane entities communicate amongst each other. As an example, a AAA entity (Authentication, Authorization and Accounting entity) or policy control systems (or entities) will be queried and backend databases might be contacted in case those databases are not implemented inside the control plane entities. Finally, control plane functions enforce their decisions on the user plane by sending requests to the user plane functionality.

In conventionally known networks, the control plane functions communicate via specific protocols on a peer-to-peer basis, e.g., via Radius protocols or Diameter protocols. This communication is peer-to-peer and requires configuring each entity with its peers and also to have a local message transport logic for the control plane messages like load balancing, resilience/redundancy and the various protocol types to be implemented inside each control plane instance. Patent documents US2014/373146 A1 and US2015/180769 A1 disclose discarding overloading messages.

### SUMMARY

An object of the present invention is to provide a technically simple, effective and cost effective solution for enhanced use of a network function entity in a carrier telecommunications network.

The object of the present invention is achieved by a method for an enhanced functionality of a network function entity in a carrier telecommunications network, as defined in claim 1.

It is thereby advantageously possible according to the present invention to provide and use a network function entity such that configuration efforts of the control plane and/or user plane entities (or, more generally, the client entities of the network function entity) can be reduced, i.e. that a configuration of each entity with its peers is not necessary.

According to the present invention, a generalized messaging system is provided. In this system, clients (or client entities) deliver their messages to the (messaging) system and the (messaging) system delivers the message (or messages) to the receiver (typically being another client entity, either of the control plane functionality or of the user plane functionality) or the receiver picks them up and performs operations and possibly puts messages resulting from the activity back to the (messaging) system.

Typically, such messaging systems have two modes of operation:
One is where all messages are queued and clients (mainly control plane client entities (or instances) but possibly also user plane client entities or user plane instances) pick messages from the queues in a first-in-first out manner.
The other option is to run such a messaging system in a fashion where messages are stored and are able to stay for a longer period of time (in extreme cases even days) until they get picked up and processed.
In both cases, overload is managed in a similar fashion by restricting the resource in the messaging system: Either by means of using or applying a limited queue size (resulting in a limited retention time) or by means of using or applying a limited amount of available storage space (i.e. memory space).

According to the present invention, one of the most important characteristics of a control plane (messaging) system is - besides the functional behavior - the manner it reacts to overload situations (or to situations of an unusual behavior of at least one client entity): In carrier networks (or carrier telecommunications networks), it is very often the case that after an outage (of some rather central functionality or service) many attached devices (such as user equipments) attach (or try to attach) to the carrier telecommunications network at the same time. Usually (and in contrast to operator-controlled entities or network nodes (such as IT endpoints) attaching to such a messaging system), there are no means to detect an overload of either the message bus or the systems attached in the backend to it. Especially, non-managed user equipments will just continuously inject requests to the messaging system and worsen the situation (in case that an overload situation exists).

In such a situation, in case that the overloaded messaging system just randomly discards messages, it is very likely that after a short time interval (of continued load increase), messages from every currently being negotiated (or handled) user equipment or subscriber attachment session will be dropped. The consequence of such a behavior of a conventionally known messaging system is dramatic: Since none of the currently processed sessions reach their final state, they will very likely all stop and restart the registration/attachment process, and, hence, lead to still more overload of the messaging system. As a consequence, the messaging system will be oscillating and, in a worst case scenario, not a single user equipment (or or subscriber) will get into service. As the user equipments are not under control of the network operator, there is no easy means to throttle the rate of registration/attachment processes down or force them to something like an exponential backoff. This leads to an unpredictable situation difficult to maintain.

According to the present invention, it is advantageously possible to provide a means to allow for overload control of incoming messages (in a messaging system as described above) while still maintaining operationality of the overall network, i.e. avoiding overload situations resulting in a severe loss of quality of service. According to the present invention, this is especially achieved for the following cases or situations:
-- overload of the messaging system (bus-like, queuing system, or routing/forwarding mechanism); ·
-- overload of one or more control plane functions (i.e. client entities, especially client entities of the control plane functionality);·
-- an overload of the dataplane function in handling messages exchanged with the message bus system (messaging system functionality).

According to the present invention, by means of either discarding or blocking at least one message (in the third step), it is advantageously possible to intelligently remove (or discard or block) messages either prior to entering the messaging system functionality or within the messaging system functionality of the session termination entity such as to avoid an overload situation which possibly results in a more severe service degradation. According to the present invention, the intelligent removal of messages either occurs prior to entering the messaging system functionality (especially by means of a messaging system load balancer functionality) or within the messaging system functionality (especially by means of a message discard functionality).

According to the present invention, it is advantageously possible to provide a more robust network function entity being able to handle situations of increased load triggered by external devices, such as user equipments. According to an example, such a network function entity could correspond to a user session termination entity (i.e. typically a mobile core network serving as user session termination entity for a mobile communication network or a subscriber edge entity serving as user session termination entity for a fixed line network or telecommunications network) as part of a carrier telecommunications network. Typicallly such a network function entity comprises both a control plane functionality, and a user plane functionality. Furthermore, the network function entity typically comprises - as part of the control plane functionality and/or as part of the user plane functionality - a plurality of client entities, i.e. typically network nodes or virtual network nodes or functional entities performing certain tasks, such as providing an AAA functionality (Authentication, Authorization and Accounting functionality) or a policy control system functionality, or providing a database functionality. According to the present invention, a messaging system (or messaging system functionality) is provided for the handling of the different requests or tasks (involving request messages and/or answer/acknowledgement messages and/or informing/command messages) to be treated or provided by the network function entity, and hence, the client entities are clients to the messaging system functionality. Furthermore according to the present invention, the messaging system functionality comprises an overload detection functionality and a message discard functionality and the messaging system functionality is used in order to have the client entities process a plurality of different (types of) messages (such as request messages and/or answer/acknowledgement messages and/or informing/command messages) incoming to the messaging system functionality or generated by the messaging system functionality and/or the client entities. In case the number of such messages per time unit (i.e. the rate of such messages) can be handled by the client entities, no problem (or unusual behavior or overload situation) occurs and and the network function entity operates with the client entities of the messaging system functionality. However, in case that the number of such messages per time unit (i.e. the rate of such messages) increases, overload situations or situations of unusual behavior might occur, leading to an unusual behavior or an overload scenario within one or a plurality of the client entities and/or within the messaging system functionality. According to the present invention, such a situation is detected by the overload detection functionality and the behavior of the network function entity adapted accordingly, namely by means of discarding or blocking at least one message (of the stream of messages (or plurality of messages) to be processed by the network function entity) either prior to entering the messaging system functionality or within the messaging system functionality of the network function entity.

The telecommunications network or carrier telecommunications network according to the present invention might be a fixed-line telecommunications network or a mobile communication network but could also have both aspects, i.e. parts of a fixed-line telecommunications network (or being a fixed-line telecommunications network in such parts) and parts of a mobile communication network (or being a mobile communication network in such parts); such networks are also known under the term fixed-mobile-convergence networks (FMC networks).

Furthermore, it is advantageously possible and preferred according to the present invention that by means of the overload detection functionality and the message discard functionality a load balancing functionality is realized as part of the messaging system functionality or wherein the messaging system comprises or is associated with a messaging system load balancer functionality, wherein preferably the messaging system load balancer functionality comprises an additional overload detection functionality and an additional message discard functionality.

By means of the load balancing functionality being realized as part of the messaging system functionality and/or by means of the messaging system load balancer functionality, it is advantageously possible according to the present invention to effectively detect overload situations and to react adequately.

According to the present invention, the overload detection functionality as well as, if applicable, the additional overload detection functionality performs a detection of either an overload situation of the monitored component (or plurality of components) or entity (or plurality of entities). This also encompasses the detection of an unusual behavior that often precedes an outright overload scenario or overload situation.

According to a further preferred embodiment of the present invention, - in the third step -, the at least one message is discarded or blocked by the message discard functionality and/or by the additional overload detection functionality.

It is thereby advantageously possible to effectively block or discard a message, either prior to entering the messaging system functionality or within the messaging system functionality of the session termination entity.

According to further embodiments of the present invention, the messaging system load balancer functionality filters incoming messages before entering the messaging system functionality and/or the message discard functionality and/or the additioal message discard functionality discards messages inside the messaging system functionality before such messages are visible to any possibly overloaded client entities.

Thereby, it is advantageously possible to comparatively easily realize the functionality to reduce the load of client entities that are either in an overload situation or that risk to enter an overload situation.

Furthermore, according to an embodiment of the present invention, the client entities are control plane entities or the client entities are user plane entities or part of the client entities are control plane entities and part of the client entities are user plane client entities.

Thereby, it is advantageously possible to easily and effectively implement the inventive method to the control plane (client entities) or to the user plane (client entities) or to both the control plane client entities (or part thereof), and the user plane client entities.

According to a further embodiment of the present invention, the unusual behavior and/or the overload scenario within one or a plurality of the client entities and/or within the messaging system functionality is detected - in the second step, and either by means of the overload detection functionality of the messaging system functionality, or by means of the additional overload detection functionality of the messaging system load balancer functionality, by means of both the overload detection functionality and the additional overload detection functionality - by means of:
-- detecting that a specific client entity of the plurality of client entities is receiving more messages per time interval than a predetermined threshold value of messages per time interval, and/or
-- detecting that a memory usage and/or a central processing unit usage of a specific client entity of the plurality of client entities is exceeding a predetermined threshold value or a plurality of predetermined threshold values of memory usage and/or of central processing unit usage, and/or
-- detecting that a reply time of a specific client entity of the plurality of client entities is exceeding a predetermined threshold value of a reply time.

Thereby, it is advantageously possible to easily and effectively implement the inventive method.

Furthermore, according to an embodiment of the present invention, the messaging system functionality is implemented as a bus and/or a queuing system and/or using a routing/forwarding mechanism, wherein especially a harmonized protocol is used for routing the messages within the messaging system functionality and/or wherein especially all or at least part of the messages within the messaging system functionality are queued and processed in a first-in-first-out manner and/or wherein especially at least part of the messages are stored and are potentially staying within the messaging system functionality for hours or even days until being processed.

Thereby, it is advantageously possible to easily and effectively implement the inventive method. The (messaging) system can be implemented as a bus, queuing system, or via a routing/forwarding mechanism. This allows for a harmonization of the protocols, the load balancing mechanisms and the routing of messages.

Furthermore, the present invention relates to a network function entity as defined in claim 9.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

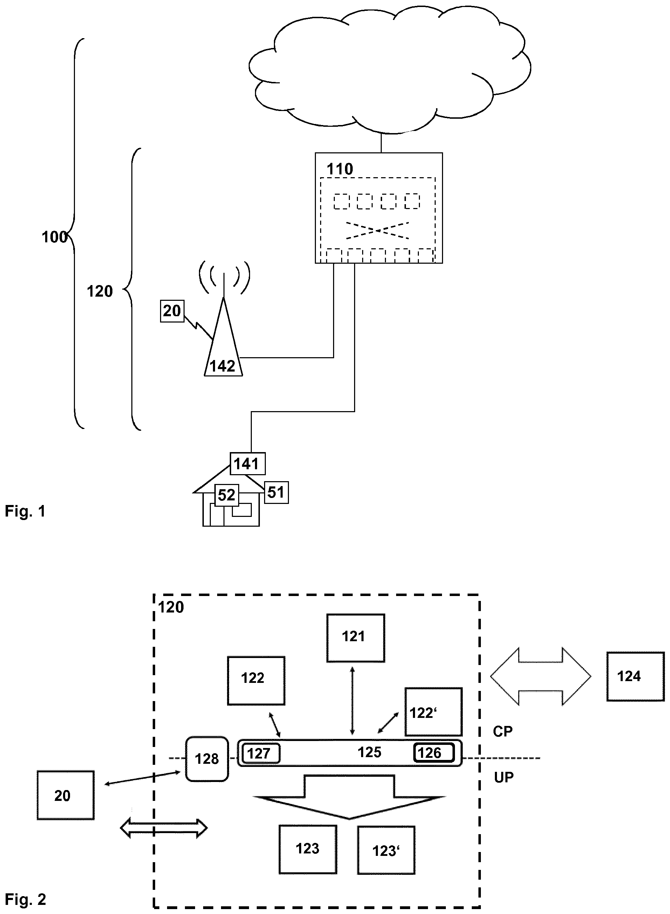

Figure 1 schematically illustrates a carrier telecommunications network according to the present invention, having a fixed line part and a mobile (or cellular) part, and, hence, providing the possibility for user equipments or client devices to use different access technologies, wherein the telecommunications network comprises a broadband access network.

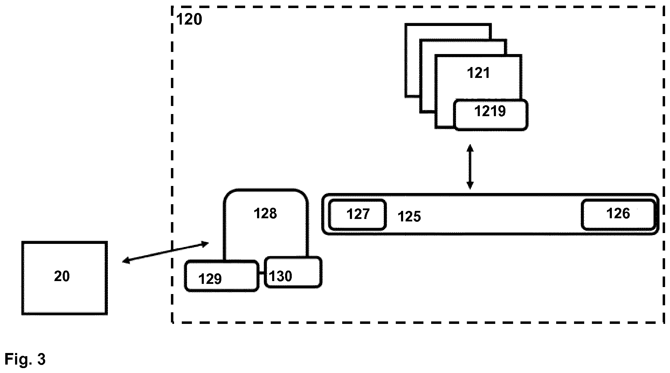

Figures 2 and 3 schematically illustrate different embodiments of a user session termination entity (as an example of a network function entity) having a messaging system and a control plane functionality and a user plane functionality, and the messaging system functionality comprising an overload detection functionality and a message discard functionality.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a carrier telecommunications network 100 according to the present invention is schematically shown, having - preferably - a fixed line part (schematically illustrated by means of home gateway entities 141 with client devices 51, 52 attached) and a mobile (or cellular) part (schematically illustrated by means of base station entities 142). According to such a preferred embodiment of the carrier telecommunications network 100 comprising a fixed line part and a mobile (or cellular) part, it is often provided (but not necessarily) for the user equipments or client devices being able to use different access technologies. However, according to the present invention, also a carrier telecommunications network 100 of the "fixed-line-only" type, or a carrier telecommunications network 100 of the "mobile (or cellular)-only" type is possible to be used according to the present invention. The carrier telecommunications network 100 comprises in the example represented (but not necessarily) a logical or physical central office point of delivery 110. The client devices are typically connected to the carrier telecommunications network 100 by means of a user session termination entity (as an example of a network function entity 120), typically either a core network in case of a mobile telecommunications network (or mobile access of the considered user equipment), or a subscriber edge entity in case of a fixed line telecommunications network (or fixed line access of the considered user equipment). User equipments are generally designated by reference sign 20 (cf. Figures 2 and 3). For the mobile access case, the user equipments 20 or client devices correspond typically to mobile phones or mobile computing devices, whereas for fixed line access, the user equipment 20 correspond to the home gateway entities 141 with connected client devices 51, 52.

According to the present invention, a network function entity 120 and a method to use such a network function entity 120 in a carrier telecommunications network 100 as represented in Figur 1 is provided. Figures 2 and 3 schematically illustrate different embodiments of such a user session termination entity 120 having a messaging system 125, wherein a user session termination entity is used as an example of the network function entity 120. The user session termination network function entity 120 comprises a control plane functionality (CP) and a user plane functionality (UP). Furthermore, the network function entity 120 comprises, as part of the control plane functionality and/or as part of the user plane functionality, a plurality of client entities 121, 122, 122', 123, 123' wherein the client entities 121, 122, 122', 123, 123' are clients to the messaging system functionality 125. The messaging system functionality 125 comprises an overload detection functionality 126 and a message discard functionality 127.

The messaging system functionality 125 is used in order to have the client entities 121, 122, 122', 123, 123' process a plurality of different messages incoming to the messaging system functionality 125 (e.g. from the user equipment 20 and/or from a database entity database functionality 124) or generated by the messaging system functionality 125 and/or the client entities 121, 122, 122', 123, 123'. In the exemplary embodiments represented in Figures 2 and 3, five client devices, namely a first client entity 121, a second client entity 122, a third client entity 122', a fourth client entity 123, and a fifth client entity 123' are schematically represented. In the exemplary embodiment, the first, second, and third client entities 121, 122, 122' are part of the control plane functionality CP, whereas the fourth, and fifth client entities 123, 123' are part of the user plane functionality UP.

According to the exemplary embodiment of the network function entity 120 represented in Figure 2, the messaging system functionality 125 comprises the overload detection functionality 126 and the message discard functionality 127 and a load balancing functionality is realized (as part of the messaging system functionality 125) by means of the overload detection functionality 126 and the message discard functionality 127.

According to the exemplary embodiment of the network function entity 120 represented in Figure 3, the messaging system functionality 125 also comprises the overload detection functionality 126 and the message discard functionality 127 and the messaging system functionality 125 comprises or is associated with a messaging system load balancer functionality 128. Preferably, the messaging system load balancer functionality 128 comprises an additional overload detection functionality 129 and an additional message discard functionality 130.

According to all embodiments of the present invention, the method comprises the following steps:
-- in a first step, the network function entity 120 operates with a plurality of client entities 121, 122, 122', 123, 123' of the messaging system functionality 125,
-- in a second step, subsequent to the first step, an unusual behavior or an overload scenario within one or a plurality of the client entities 121, 122, 122', 123, 123' and/or within the messaging system functionality 125 is detected by the overload detection functionality 126,
-- in a third step, subsequent to the second step, at least one message is discarded or blocked, either prior to entering the messaging system functionality 125 or within the messaging system functionality 125 of the network function entity 120.

According to the present invention, in the network function entity 120, clients (or client entities 121, 122, 122', 123, 123') deliver their messages to the (messaging) system functionality 125 and the (messaging) system 125 delivers the message (or messages) to the receiver (typically being another client entity 121, 122, 122', 123, 123', either of the control plane functionality or of the user plane functionality) or the receiver picks them up and performs operations and possibly puts messages resulting from the activity back to the (messaging) system. In this respect, typically, control plane messages in many or most cases have to take the same physical path as data plane messages; however this is not depicted in the figures.

According to a preferred embodiment, the messaging system load balancer functionality 128 (or MS-LB) is able to filter incoming messages before entering the messaging system functionality 125. The message discard functionality 127 and/or the additional message discard functionality 130 IDF is able to discard messages inside the messaging system functionality 125 before they will be visible to any possibly overloaded client entities (especially control plane functions) 121, 122, 122'.

Typicalls, all the involved functions are equipped with an overload detection function or a client overload detection function 1219, exemplarily depicted in Figure 3.

The client overload detection function 1219 inside the client entities is able to detect that a client entity is receiving more messages per second than it can handle. Triggers for such a detection can be, e.g., memory or CPU usage as well as time it takes to reply to a request. A client entity can also be a user plane function that might, e.g., not be able to execute the requested user plane flow installation rules per second.

The overload detection functionality 126 inside the messaging system 125 can in principle also detect an overload at client side based on the response time or even pre-configured threshold being implemented inside the client overload detection function 1219. The overload detection functionality 126 inside (or embedded in) the messaging system is also able to check the health status (processor utilization, mem usage, etc) of client entities. Finally, the additional overload detection functionality 129 inside the messaging system load balancer functionality 128 (or MS-LB) is able to detect overload of itself which would be probably most mission critical as it is expected that the messaging system load balancer functionality 128 is the most performant function in the whole processing chain as well as possible overload in the messaging system 125 or the clients by working with thresholds or anomaly detection embedded inside itself.

The process in the key use cases is as follows ·
-- if a client overload detection function 1219 detects an overload situation, it reports to the messaging system or to the messaging system load balancer functionality 128;·
-- if the messaging system load balancer functionality 128 detects overload, it triggers the additional message discard functionality 130 and/or reports to the additional overload detection functionality 129 of the messaging system load balancer functionality 128;·
-- if the additional overload detection functionality 129 of the messaging system load balancer functionality 128 detects overload it triggers its additional message discard functionality 130.

In the following, examples for detection rules are provided:

Intelligent Discard Function: messaging system load balancer functionality 128 implementation
The messaging system load balancer functionality 128 is the gating function into the messaging system 125 and its overload protection function (i.e. the additional overload detection functionality 129) is part of this invention. It is assumed that it will be implemented using highly performant hardware such as e.g. a programmable ASIC.
Detection of an overload situation based on the number of messages per time interval: Depending on the actual implementation, the messaging system load balancer functionality 128 can, e.g., detect single user equipment sessions "go wild". In all cases, the user equipment session can be detected per user equipment. Such as for mobile networks the IP address of the used underlay, in fixed networks e.g., the S-C VLAN combination or the MAC address. In a preferred embodiment we make use of stateless information, i.e. information included in every packet that is transmitted, independent on direction. As an example, the VLAN ranges are considered:
With the following pseudo-command, the load balancer will dispatch the S-VLAN (outer VLAN) ranges 400 to 800 to a specific message bus instance. It needs to create a flow rule (in this example case the one with arbitrary number 678) to reach the messaging system (bus) instance:
"rule 678: source SVLAN 400-800 direct to port that connects MS Bus instance 8" Now, a monitoring rule can be applied to all messages hitting rule 678: "apply monitoring rule 77 to routing rule 678 set threshold 100 messages/s" the pseudo command above created a threshold configuration to limit the aggregate amount of messages per second from the VLAN range specified by rule 678 to instance 8 to 100 requests per second. This can, e.g., be achieved using programmable chipsets. Hence, this example shows a detection rule based on the number of messages per time interval (in the example 100 messages per second) of a specific sort of messages, defined by the source of the messages (in the example, the messages having source VLAN ranges between 400 and 800).

### Message discard functionality:

In case the overload condition is valid, the message discard functionality 127 or the additional message discard functionality 130 might act as follows: instantiate a rule that discards all packets according to a certain pattern, as example every packet with even SVLAN number "drop all frames source SVLAN 400 mod 2 is 0" Combined with the detection rules above, this would lead to the system dropping the received messages for exactly all subscribers with even VLANs, leaving all aothers untouched.
In a messaging storm due to a reboot, assuming an even distribution of customers across VLANs, this can cut the messaging load by a factor of 2. The rule can also become applied proactively, i.e. in case that the threshold is reached (or exceeded) the discard rule is applied.

According to another example, the message discard functionality 127 or the additional message discard functionality 130 can enforce a more fine granular check to identify where the overload comes from. in the extreme case down to a certain UE like
"rule 555 cache all flows SVLAN 400-800 report statistics" "apply monitoring rule 66 to caching rule 555 set threshold 50 messages/s" now, the overload detection functionality 126 and/or the additional overload detection functionality 129 will learn exactly which customer or user equipment caused an overload. The rates for every VLAN will be reported. With this, the system can individually disconnect individual customers by applying "rule source SVLAN 441 any any drop" In case the customer behind VLAN 441 caused the overload
In this example, explicit VLANs are used; however, other kinds of classifiers are possible as well. Also hash functions could be built.

Hence, according to the present invention, the load balancer is able to throttle traffic and allow for a sort of "greaceful restart" after an outage when many customers connect at the same time.

### Messaging system implementation

In the messaging system, we assume - if a load balancer was deployed - that the messaging system itself will not go into overlaod but needs to protect the clients (or client entities).

The clients (or client entities) can signal to the messaging system overload detection functionality any kind of overload. The messaging system will then need to remove messages from the queues or memory according to a rule that affects a selected subset of user equipments and the "to-be-protected" client instance.
"drop ingress message source SVLAN range 600-700; clean up queue" or e.g.
"drop ingress message hash (src ip, src mac in range A) "

## Claims

1. Method for an enhanced functionality of a network function entity (120) in a carrier telecommunications network (100), the network function entity (120) comprising a control plane functionality and a user plane functionality, and the network function entity (120) comprising, as part of the control plane functionality and/or as part of the user plane functionality, a plurality of client entities (121, 122, 123) wherein the client entities (121, 122, 123) are clients to a messaging system functionality (125) comprised in the network function entity (120),
wherein the messaging system functionality (125) comprises an overload detection functionality (126) and a message discard functionality (127) and wherein the messaging system functionality (125) is used in order to have the client entities (121, 122, 123) process a plurality of different messages incoming to the messaging system functionality (125) or generated by the messaging system functionality (125) and/or the client entities (121, 122, 123), wherein the messaging system functionality (125) comprises or is associated with a messaging system load balancer functionality (128) comprised in the network function entity (120), wherein the messaging system load balancer functionality (128) comprises an additional overload detection functionality (129) and an additional message discard functionality (130), wherein the messaging system load balancer functionality (128) is a gating function into the messaging system functionality (125), wherein the method comprises the following steps:
-- in a first step, the network function entity (120) operates with a plurality of client entities (121, 122, 123) of the messaging system functionality (125),
-- in a second step, subsequent to the first step, an unusual behavior or an overload scenario within one or a plurality of the client entities (121, 122, 123) and/or within the messaging system functionality (125) is detected by the overload detection functionality (126),
-- in a third step, subsequent to the second step, at least one message is blocked prior to entering the messaging system functionality (125) by the additional message discard functionality (130) or discarded within the messaging system functionality (125) of the network function entity (120).

2. Method according to claim 1,
wherein preferably the overload detection functionality (126) and/or the additional overload detection functionality (129) especially detects at least one out of the following:
-- an overload situation of the messaging system;
-- an overload situation of one or more client entities;
-- an overload of the dataplane function in handling messages exchanged with the messaging system functionality (125).

3. Method according to one of the preceding claims, wherein - in the third step -, the at least one message is discarded by the message discard functionality (127) and/or by the additional overload detection functionality (129).

4. Method according to one of the preceding claims, wherein the messaging system load balancer functionality (128) filters incoming messages before entering the messaging system functionality (125) and/or wherein the message discard functionality (127) and/or the additional message discard functionality (130) discards messages inside the messaging system functionality (125) before such messages are visible to any possibly overloaded client entities (121, 122, 123).

5. Method according to one of the preceding claims, wherein the client entities (121, 122, 123) are control plane entities or wherein the client entities (121, 122, 123) are user plane entities or wherein part of the client entities (121, 122, 123) are control plane entities and part of the client entities (121, 122, 123) are user plane entities.

6. Method according to one of the preceding claims, wherein at least part of the client entities (121, 122, 123) comprise a client overload detection function (1219).

7. Method according to one of the preceding claims, wherein the unusual behavior and/or the overload scenario within one or a plurality of the client entities (121, 122, 123) and/or within the messaging system functionality (125) is detected - in the second step, and either by means of the overload detection functionality (126) of the messaging system functionality (125), or by means of the additional overload detection functionality (129) of the messaging system load balancer functionality (128), by means of both the overload detection functionality (126) and the additional overload detection functionality (129) - by means of:
-- detecting that a specific client entity of the plurality of client entities (121, 122, 123) is receiving more messages per time interval than a predetermined threshold value of messages per time interval, and/or
-- detecting that a memory usage and/or a central processing unit usage of a specific client entity of the plurality of client entities (121, 122, 123) is exceeding a predetermined threshold value or a plurality of predetermined threshold values of memory usage and/or of central processing unit usage, and/or
-- detecting that a reply time of a specific client entity of the plurality of client entities (121, 122, 123) is exceeding a predetermined threshold value of a reply time.

8. Method according to one of the preceding claims, wherein the messaging system functionality (125) is implemented as a bus and/or a queuing system and/or using a routing/forwarding mechanism, wherein especially a harmonized protocol is used for routing the messages within the messaging system functionality (125) and/or wherein especially all or at least part of the messages within the messaging system functionality (125) are queued and processed in a first-in-first-out manner and/or wherein especially at least part of the messages are stored and are potentially staying within the messaging system functionality (125) for hours or even days until being processed.

9. Network function entity (120) having an enhanced functionality within a carrier telecommunications network (100), the network function entity (120) comprising a control plane functionality and a user plane functionality, and the network function entity (120) comprising, as part of the control plane functionality and/or as part of the user plane functionality, a plurality of client entities (121, 122, 123) wherein the client entities (121, 122, 123) are clients to a messaging system functionality (125) comprised in the network function entity (120),
wherein the messaging system functionality (125) comprises an overload detection functionality (126) and a message discard functionality (127) and wherein the messaging system functionality (125) is used in order to have the client entities (121, 122, 123) process a plurality of different messages incoming to the messaging system functionality (125) or generated by the messaging system functionality (125) and/or the client entities (121, 122, 123), wherein the messaging system functionality (125) comprises or is associated with a messaging system load balancer functionality (128) comprised in the network function entity (120), wherein the messaging system load balancer functionality (128) comprises an additional overload detection functionality (129) and an additional message discard functionality (130), wherein the messaging system load balancer functionality (128) is a gating function into the messaging system functionality (125), wherein the network function entity (120) is configured such that:
-- the network function entity (120) operates with a plurality of client entities (121, 122, 123) of the messaging system functionality (125),
-- an unusual behavior or an overload scenario within one or a plurality of the client entities (121, 122, 123) and/or within the messaging system functionality (125) is detected by the overload detection functionality (126),
-- at least one message is blocked prior to entering the messaging system functionality (125) by the additional message discard functionality (130) or discarded within the messaging system functionality (125) of the network function entity (120).

10. Carrier telecommunications network (100) comprising a network function entity (120) according to claim 9.

11. System for an enhanced functionality of a network function entity (120) comprising a network function entity (120) according to claim 9 within a carrier telecommunications network (100).

12. Program comprising a computer readable program code which, when executed on a computer implements a network function entity (120) to perform a method according to one of claims 1 to 8

13. Computer-readable medium comprising instructions which when executed on a computer implement a network function entity (120) to perform a method according to one of claims 1 to 8.

## Patentansprüche

1. Verfahren für eine erweiterte Funktionalität einer Netzfunktionsentität (120) in einem Träger-Telekommunikationsnetz (100), wobei die Netzfunktionsentität (120) eine Steuerungsebenenfunktionalität und eine Benutzerebenenfunktionalität umfasst und die Netzfunktionsentität (120) als Teil der Steuerungsebenenfunktionalität und/oder als Teil der Benutzerebenenfunktionalität mehrere Client-Entitäten (121, 122, 123) umfasst, wobei die Client-Entitäten (121, 122, 123) Clients für eine Nachrichtenübermittlungssystemfunktionalität (125) sind, die in der Netzfunktionsentität (120) enthalten ist, wobei die Nachrichtenübermittlungssystemfunktionalität (125) eine Überlastungsdetektionsfunktionalität (126) und eine Nachrichtenverwerfungsfunktionalität (127) umfasst und wobei die Nachrichtenübermittlungssystemfunktionalität (125) verwendet wird, um die Client-Entitäten (121, 122, 123) mehrere verschiedene Nachrichten verarbeiten zu lassen, die bei der Nachrichtenübermittlungssystemfunktionalität (125) eingehen oder durch die Nachrichtenübermittlungssystemfunktionalität (125) und/oder die Client-Entitäten (121, 122, 123) generiert werden,
wobei die Nachrichtenübermittlungssystemfunktionalität (125) eine Nachrichtenübermittlungssystem-Lastausgleicherfunktionalität (128) umfasst oder damit verknüpft ist, die in der Netzwerkfunktionsentität (120) enthalten ist, wobei die Nachrichtenübermittlungssystem-Lastausgleicherfunktionalität (128) eine zusätzliche Überlastdetektionsfunktionalität (129) und eine zusätzliche Nachrichtenverwerfungsfunktionalität (130) umfasst, wobei die Nachrichtenübermittlungssystem-Lastausgleicherfunktionalität (128) eine Gating-Funktion in die Nachrichtenübermittlungssystemfunktionalität (125) ist, wobei das Verfahren die folgenden Schritte umfasst:
- in einem ersten Schritt arbeitet die Netzfunktionsentität (120) mit mehreren Client-Entitäten (121, 122, 123) der Nachrichtenübermittlungssystemfunktionalität (125),
- in einem zweiten Schritt, im Anschluss an den ersten Schritt, wird ein ungewöhnliches Verhalten oder ein Überlastszenario innerhalb einer oder mehreren der Client-Entitäten (121, 122, 123) und/oder innerhalb der Nachrichtenübermittlungssystemfunktionalität (125) durch die Überlastdetektionsfunktionalität (126) detektiert,
- in einem dritten Schritt, im Anschluss an den zweiten Schritt, wird mindestens eine Nachricht vor dem Eintreten in die Nachrichtenübermittlungssystemfunktionalität (125) durch die zusätzliche Nachrichtenverwerfungsfunktionalität (130) blockiert oder innerhalb der Nachrichtenübermittlungssystemfunktionalität (125) der Netzfunktionsentität (120) verworfen.

2. Verfahren nach Anspruch 1, wobei bevorzugt die Überlastungsdetektionsfunktionalität (126) und/oder die zusätzliche Überlastungsdetektionsfunktionalität (129) insbesondere mindestens eines von Folgendem detektiert:
- eine Überlastsituation des Nachrichtenübermittlungssystems;
- eine Überlastsituation einer oder mehrerer Client-Entitäten;
- eine Überlastung der Datenebenenfunktion bei der Handhabung von Nachrichten, die mit der Nachrichtenübermittlungssystemfunktionalität (125) ausgetauscht werden.

3. Verfahren nach einem der vorangehenden Ansprüche, wobei - in dem dritten Schritt - die mindestens eine Nachricht durch die Nachrichtenverwerfungsfunktionalität (127) und/oder durch die zusätzliche Überlastdetektionsfunktionalität (129) verworfen wird.

4. Verfahren nach einem der vorangehenden Ansprüche, wobei die Nachrichtenübermittlungssystem-Lastausgleicherfunktionalität (128) eingehende Nachrichten filtert, bevor sie in die Nachrichtenübermittlungssystemfunktionalität (125) eintreten, und/oder wobei die Nachrichtenverwerfungsfunktionalität (127) und/oder die zusätzliche Nachrichtenverwerfungsfunktionalität (130) Nachrichten innerhalb der Nachrichtenübermittlungssystemfunktionalität (125) verwerfen, bevor solche Nachrichten für möglicherweise überlastete Client-Entitäten (121, 122, 123) sichtbar sind.

5. Verfahren nach einem der vorangehenden Ansprüche, wobei die Client-Entitäten (121, 122, 123) Steuerungsebenen-Entitäten sind oder wobei die Client-Entitäten (121, 122, 123) Benutzerebenen-Entitäten sind oder wobei ein Teil der Client-Entitäten (121, 122, 123) Steuerungsebenen-Entitäten sind und ein Teil der Client-Entitäten (121, 122, 123) Benutzerebenen-Entitäten sind.

6. Verfahren nach einem der vorangehenden Ansprüche, wobei mindestens ein Teil der Client-Entitäten (121, 122, 123) eine Client-Überlastdetektionsfunktion (1219) umfasst.

7. Verfahren nach einem der vorangehenden Ansprüche, wobei das ungewöhnliche Verhalten und/oder das Überlastszenario innerhalb einer oder mehrerer der Client-Entitäten (121, 122, 123) und/oder innerhalb der Nachrichtenübermittlungssystemfunktionalität (125) - in dem zweiten Schritt, und entweder mittels der Überlastdetektionsfunktionalität (126) der Nachrichtenübermittlungssystemfunktionalität (125) oder mittels der zusätzlichen Überlastdetektionsfunktionalität (129) der Nachrichtenübermittlungssystem-Lastausgleicherfunktionalität (128), mittels sowohl der Überlastdetektionsfunktionalität (126) als auch der zusätzlichen Überlastdetektionsfunktionalität (129) - detektiert wird mittels:
- Detektieren, dass eine spezifische Client-Entität der mehreren Client-Entitäten (121, 122, 123) mehr Nachrichten pro Zeitintervall empfängt als ein zuvor festgelegter Schwellenwert von Nachrichten pro Zeitintervall, und/oder
- Detektieren, dass eine Speichernutzung und/oder eine Nutzung einer zentralen Verarbeitungseinheit einer spezifischen Client-Entität der mehreren Client-Entitäten (121, 122, 123) einen zuvor festgelegten Schwellenwert oder mehrere zuvor festgelegte Schwellenwerte der Speichernutzung und/oder der Nutzung einer zentralen Verarbeitungseinheit überschreitet, und/oder
- Detektieren, dass eine Antwortzeit einer spezifischen Client-Entität der mehreren Client-Entitäten (121, 122, 123) einen zuvor festgelegten Schwellenwert einer Antwortzeit überschreitet.

8. Verfahren nach einem der vorangehenden Ansprüche, wobei die Nachrichtenübermittlungssystemfunktionalität (125) als ein Bus und/oder ein Warteschlangensystem und/oder unter Verwendung eines Routungs-/Weiterleitungsmechanismus implementiert wird, wobei insbesondere ein harmonisiertes Protokoll für das Routen der Nachrichten innerhalb der Nachrichtenübermittlungssystemfunktionalität (125) verwendet wird und/oder wobei insbesondere alle oder mindestens ein Teil der Nachrichten innerhalb der Nachrichtenübermittlungssystemfunktionalität (125) in eine Warteschlange eingereiht und in einer First-in-First-out-Weise verarbeitet werden und/oder wobei insbesondere mindestens ein Teil der Nachrichten gespeichert werden und möglicherweise stunden- oder sogar tagelang innerhalb der Nachrichtenübermittlungssystemfunktionalität (125) verbleiben, bis sie verarbeitet werden.

9. Netzfunktionsentität (120), aufweisend eine erweiterte Funktionalität innerhalb eines Träger-Telekommunikationsnetzes (100), wobei die Netzfunktionsentität (120) eine Steuerungsebenenfunktionalität und eine Benutzerebenenfunktionalität umfasst und die Netzfunktionsentität (120) als Teil der Steuerungsebenenfunktionalität und/oder als Teil der Benutzerebenenfunktionalität mehrere Client-Entitäten (121, 122, 123) umfasst, wobei die Client-Entitäten (121, 122, 123) Clients für eine Nachrichtenübermittlungssystemfunktionalität (125) sind, die in der Netzfunktionsentität (120) enthalten ist, wobei die Nachrichtenübermittlungssystemfunktionalität (125) eine Überlastungsdetektionsfunktionalität (126) und eine Nachrichtenverwerfungsfunktionalität (127) umfasst und wobei die Nachrichtenübermittlungssystemfunktionalität (125) verwendet wird, um die Client-Entitäten (121, 122, 123) mehrere verschiedene Nachrichten verarbeiten zu lassen, die bei der Nachrichtenübermittlungssystemfunktionalität (125) eingehen oder durch die Nachrichtenübermittlungssystemfunktionalität (125) und/oder die Client-Entitäten (121, 122, 123) generiert werden,
wobei die Nachrichtenübermittlungssystemfunktionalität (125) eine Nachrichtenübermittlungssystem-Lastausgleicherfunktionalität (128) umfasst oder damit verknüpft ist, die in der Netzwerkfunktionsentität (120) enthalten ist, wobei die Nachrichtenübermittlungssystem-Lastausgleicherfunktionalität (128) eine zusätzliche Überlastdetektionsfunktionalität (129) und eine zusätzliche Nachrichtenverwerfungsfunktionalität (130) umfasst, wobei die Nachrichtenübermittlungssystem-Lastausgleicherfunktionalität (128) eine Gating-Funktion in die Nachrichtenübermittlungssystemfunktionalität (125) ist, wobei die Netzwerkfunktionsentität (120) so eingerichtet ist, dass
- die Netzfunktionsentität (120) mit mehreren Client-Entitäten (121, 122, 123) der Nachrichtenübermittlungssystemfunktionalität (125) arbeitet,
- ein ungewöhnliches Verhalten oder ein Überlastszenario innerhalb einer oder mehreren der Client-Entitäten (121, 122, 123) und/oder innerhalb der Nachrichtenübermittlungssystemfunktionalität (125) durch die Überlastdetektionsfunktionalität (126) detektiert wird,
- mindestens eine Nachricht vor dem Eintreten in die Nachrichtenübermittlungssystemfunktionalität (125) durch die zusätzliche Nachrichtenverwerfungsfunktionalität (130) blockiert oder innerhalb der Nachrichtenübermittlungssystemfunktionalität (125) der Netzfunktionsentität (120) verworfen wird.

10. Träger-Telekommunikationsnetz (100), umfassend eine Netzfunktionsentität (120) nach Anspruch 9.

11. System für eine erweiterte Funktionalität einer Netzfunktionsentität (120), umfassend eine Netzfunktionsentität (120) nach Anspruch 9 in einem Träger-Telekommunikationsnetz (100).

12. Programm, umfassend einen computerlesbaren Programmcode, der, wenn er auf einem Computer ausgeführt wird, eine Netzwerkfunktionsentität (120) implementiert, um ein Verfahren nach einem der Ansprüche 1 bis 8 durchzuführen.

13. Computerlesbares Medium, umfassend Instruktionen, die, wenn sie auf einem Computer ausgeführt werden, eine Netzwerkfunktionsentität (120) implementieren, um ein Verfahren nach einem der Ansprüche 1 bis 8 durchzuführen.

## Revendications

1. Procédé pour une fonctionnalité améliorée d'une entité de fonction de réseau (120) dans un réseau de télécommunications d'opérateur (100), l'entité de fonction de réseau (120) comprenant une fonctionnalité de plan de commande et une fonctionnalité de plan utilisateur, et l'entité de fonction de réseau (120) comprenant, dans le cadre de la fonctionnalité de plan de commande et/ou dans le cadre de la fonctionnalité de plan utilisateur, une pluralité d'entités clientes (121, 122, 123), dans lequel les entités clientes (121, 122, 123) sont des clients d'une fonctionnalité de système de messagerie (125) comprise dans l'entité de fonction de réseau (120),
dans lequel la fonctionnalité de système de messagerie (125) comprend une fonctionnalité de détection de surcharge (126) et une fonctionnalité de rejet de messages (127) et la fonctionnalité de système de messagerie (125) est utilisée pour que les entités clientes (121, 122, 123) traitent une pluralité de messages différents entrant dans la fonctionnalité de système de messagerie (125) ou générés par la fonctionnalité de système de messagerie (125) et/ou les entités clientes (121, 122, 123), dans lequel la fonctionnalité de système de messagerie (125) comprend ou est associée à une fonctionnalité d'équilibreur de charge de système de messagerie (128) comprise dans l'entité de fonction de réseau (120), dans lequel la fonctionnalité d'équilibreur de charge de système de messagerie (128) comprend une fonctionnalité de détection de surcharge supplémentaire (129) et une fonctionnalité de rejet de messages supplémentaire (130), dans lequel la fonctionnalité d'équilibreur de charge de système de messagerie (128) est une fonction de portillonnage dans la fonctionnalité de système de messagerie (125), dans lequel le procédé comprend les étapes suivantes :
- dans une première étape, l'entité de fonction de réseau (120) fonctionne avec une pluralité d'entités clientes (121, 122, 123) de la fonctionnalité de système de messagerie (125),
- dans une deuxième étape, subséquente à la première étape, un comportement inhabituel ou un scénario de surcharge dans une ou plusieurs entités clientes (121, 122, 123) et/ou dans la fonctionnalité de système de messagerie (125) est détecté par la fonctionnalité de détection de surcharge (126),
- dans une troisième étape, subséquente à la deuxième étape, au moins un message est bloqué avant d'entrer dans la fonctionnalité de système de messagerie (125) par la fonctionnalité de rejet de messages supplémentaire (130) ou rejeté dans la fonctionnalité de système de messagerie (125) de l'entité de fonction de réseau (120).

2. Procédé selon la revendication 1, dans lequel, de préférence, la fonctionnalité de détection de surcharge (126) et/ou la fonctionnalité de détection de surcharge supplémentaire (129) détectent en particulier au moins l'un parmi :
- une situation de surcharge du système de messagerie ;
- une situation de surcharge d'une ou plusieurs entités clientes ;
- une surcharge de la fonction de plan de données dans le traitement des messages échangés avec la fonctionnalité de système de messagerie (125).

3. Procédé selon l'une des revendications précédentes, dans lequel - au cours de la troisième étape - l'au moins un message est rejeté par la fonctionnalité de rejet de messages (127) et/ou par la fonctionnalité de détection de surcharge supplémentaire (129).

4. Procédé selon l'une des revendications précédentes, dans lequel la fonctionnalité d'équilibreur de charge de système de messagerie (128) filtre des messages entrants avant qu'ils n'entrent dans la fonctionnalité de système de messagerie (125) et/ou dans lequel la fonctionnalité de rejet de messages (127) et/ou la fonctionnalité de rejet de messages supplémentaire (130) rejettent des messages à l'intérieur de la fonctionnalité de système de messagerie (125) avant que ces messages ne soient visibles par des entités clientes possiblement surchargées (121, 122, 123).

5. Procédé selon l'une des revendications précédentes, dans lequel les entités clientes (121, 122, 123) sont des entités du plan de commande ou dans lequel les entités clientes (121, 122, 123) sont des entités du plan utilisateur ou dans lequel une partie des entités clientes (121, 122, 123) sont des entités du plan de commande et une partie des entités clientes (121, 122, 123) sont des entités du plan utilisateur.

6. Procédé selon l'une des revendications précédentes, dans lequel au moins une partie des entités clientes (121, 122, 123) comprend une fonction de détection de surcharge de client (1219).

7. Procédé selon l'une des revendications précédentes, dans lequel le comportement inhabituel et/ou le scénario de surcharge dans une ou une pluralité des entités clientes (121, 122, 123) et/ou dans la fonctionnalité de système de messagerie (125) sont détectés - dans la deuxième étape, et soit au moyen de la fonctionnalité de détection de surcharge (126) de la fonctionnalité de système de messagerie (125), soit au moyen de la fonctionnalité de détection de surcharge supplémentaire (129) de la fonctionnalité d'équilibreur de charge de système de messagerie (128), au moyen à la fois de la fonctionnalité de détection de surcharge (126) et de la fonctionnalité de détection de surcharge supplémentaire (129) - au moyen de :
- la détection du fait qu'une entité cliente spécifique de la pluralité d'entités clientes (121, 122, 123) reçoit plus de messages par intervalle de temps qu'une valeur seuil prédéterminée de messages par intervalle de temps, et/ou
- la détection du fait qu'une utilisation de la mémoire et/ou de l'unité centrale de traitement d'une entité cliente spécifique de la pluralité d'entités clientes (121, 122, 123) dépasse une valeur seuil prédéterminée ou une pluralité de valeurs seuils prédéterminées d'utilisation de la mémoire et/ou de l'unité centrale de traitement, et/ou
- la détection du fait qu'un temps de réponse d'une entité cliente spécifique de la pluralité d'entités clientes (121, 122, 123) dépasse une valeur seuil prédéterminée d'un temps de réponse.

8. Procédé selon l'une des revendications précédentes, dans lequel la fonctionnalité de système de messagerie (125) est mise en œuvre sous la forme d'un bus et/ou d'un système de file d'attente et/ou à l'aide d'un mécanisme de routage/transfert, dans lequel en particulier, un protocole harmonisé est utilisé pour acheminer les messages au sein de la fonctionnalité de système de messagerie (125) et/ou dans lequel en particulier tous les messages ou au moins une partie des messages au sein de la fonctionnalité de système de messagerie (125) sont mis en file d'attente et traités selon le principe « premier entré, premier sorti » et/ou dans lequel en particulier au moins une partie des messages est stockée et peut rester au sein de la fonctionnalité de système de messagerie (125) pendant des heures, voire des jours, jusqu'à ce qu'elle soit traitée.

9. Entité de fonction de réseau (120) ayant une fonctionnalité améliorée au sein d'un réseau de télécommunications d'opérateur (100), l'entité de fonction de réseau (120) comprenant une fonctionnalité de plan de commande et une fonctionnalité de plan utilisateur, et l'entité de fonction de réseau (120) comprenant, en tant que partie de la fonctionnalité de plan de commande et/ou en tant que partie de la fonctionnalité de plan utilisateur, une pluralité d'entités clientes (121, 122, 123), dans lequel les entités clientes (121, 122, 123) sont des clients d'une fonctionnalité de système de messagerie (125) comprise dans l'entité de fonction de réseau (120),
dans lequel la fonctionnalité de système de messagerie (125) comprend une fonctionnalité de détection de surcharge (126) et une fonctionnalité de rejet de messages (127) et la fonctionnalité de système de messagerie (125) est utilisée pour que les entités clientes (121, 122, 123) traitent une pluralité de messages différents entrant dans la fonctionnalité de système de messagerie (125) ou générés par la fonctionnalité de système de messagerie (125) et/ou les entités clientes (121, 122, 123), dans lequel la fonctionnalité de système de messagerie (125) comprend ou est associée à une fonctionnalité d'équilibreur de charge de système de messagerie (128) comprise dans l'entité de fonction de réseau (120), dans lequel la fonctionnalité d'équilibreur de charge de système de messagerie (128) comprend une fonctionnalité de détection de surcharge supplémentaire (129) et une fonctionnalité de rejet de messages supplémentaire (130), dans lequel la fonctionnalité d'équilibreur de charge de système de messagerie (128) est une fonction de portillonnage dans la fonctionnalité de système de messagerie (125), dans lequel l'entité de fonction de réseau (120) est configurée de telle sorte que :
- l'entité de fonction de réseau (120) fonctionne avec une pluralité d'entités clientes (121, 122, 123) de la fonctionnalité de système de messagerie (125),
- un comportement inhabituel ou un scénario de surcharge dans une ou plusieurs entités clientes (121, 122, 123) et/ou dans la fonctionnalité de système de messagerie (125) est détecté par la fonctionnalité de détection de surcharge (126),
- au moins un message est bloqué avant d'entrer dans la fonctionnalité de système de messagerie (125) par la fonctionnalité de rejet de messages supplémentaire (130) ou rejeté dans la fonctionnalité de système de messagerie (125) de l'entité de fonction de réseau (120) .

10. Réseau de télécommunication d'opérateur (100) comprenant une entité de fonction de réseau (120) selon la revendication 9.

11. Système d'amélioration de la fonctionnalité d'une entité de fonction de réseau (120) comprenant une entité de fonction de réseau (120) selon la revendication 9 au sein d'un réseau de télécommunication d'opérateur (100).

12. Programme comprenant un code de programme lisible par ordinateur qui, lorsqu'il est exécuté sur un ordinateur, met en œuvre une entité de fonction de réseau (120) pour effectuer un procédé selon l'une des revendications 1 à 8.

13. Support lisible par ordinateur comprenant des instructions qui, lorsqu'elles sont exécutées sur un ordinateur, mettent en œuvre une entité de fonction de réseau (120) pour effectuer un procédé selon l'une des revendications 1 à 8.
